# EUROPEAN PATENT SPECIFICATION

(11) **EP 2 639 201 B1**
(45) Date of publication and mention of the grant of the patent: **10.02.2016**
(21) Application number: 12159480.8
(22) Date of filing: 14.03.2012
(51) Int. Cl.: C01B 31/04

(54) **PREPARATION METHOD FOR GRAPHENE OXIDE SUITABLE FOR GRAPHENE PRODUCTION**
VERFAHREN ZUR HERSTELLUNG VON GRAPHENOXID ZUR GRAPHENHERSTELLUNG
PROCÉDÉ DE PRÉPARATION D'OXYDE DE GRAPHÈNE APPROPRIÉ POUR LA PRODUCTION DE GRAPHÈNE

(43) Date of publication of application: 18.09.2013
(60) Divisional application: 15202056.6
(73) Proprietor: Friedrich-Alexander-Universität Erlangen-Nürnberg, 91054 Erlangen (DE)
(72) Inventor: Eigler, Siegfried, 91058 Erlangen (DE); Hirsch, Andreas, 91080 Marloffstein (DE)
(74) Representative: Huebner, Stefan Rolf

(56) References cited:
- AYRAT DIMIEV ET AL: "Pristine Graphite Oxide", JOURNAL OF THE AMERICAN CHEMICAL SOCIETY, vol. 134, no. 5, 8 February 2012 (2012-02-08), pages 2815-2822, XP055032402, ISSN: 0002-7863, DOI: 10.1021/ja211531y
- ZHI XU ET AL: "Electrical Conductivity, Chemistry, and Bonding Alternations under Graphene Oxide to Graphene Transition As Revealed by In Situ TEM", ACS NANO, vol. 5, no. 6, 28 June 2011 (2011-06-28), pages 4401-4406, XP055032453, ISSN: 1936-0851, DOI: 10.1021/nn103200t
- HIRATA M ET AL: "Thin-film particles of graphite oxide 1: - High-yield synthesis and flexibility of the particles", CARBON, ELSEVIER, OXFORD, GB, vol. 42, no. 14, 1 January 2004 (2004-01-01), pages 2929-2937, XP004560168, ISSN: 0008-6223, DOI: 10.1016/J.CARBON.2004.07.003

## Description

### Field of the invention

The invention relates to graphite oxide.

### Background of the invention

Graphite is a well-known allotropic form of carbon. It consists of stacks of parallel two-dimensional graphene sheets. Each graphene sheet has a two-dimensional hexagonal lattice of sp²-hybridized carbon atoms. In a graphite crystal the individual graphene sheets are held together by weak van der Waals-forces, while within each graphene sheet the carbon atoms are covalently bound. It is believed that it is this anisotropy that provides individual graphene sheets (single-layer graphene) and stacks of only a few graphene sheets (multi-layer graphene) with their unique mechanical, thermal and electrical properties. These properties are similar and sometimes even superior to those of carbon nanotubes. Thus, there is a keen interest in finding ways to mass produce single-layer and multi-layer graphene in order to exploit its properties on an industrial scale.

In K. S. Novoselov et al., "Electric field effect in atomically thin carbon films", Science 2004, 306(5696), 666-9, and the corresponding online supplement, it is disclosed that individual graphene sheets are thermodynamically stable and can be exfoliated and placed on a silicon dioxide substrate by means of an adhesive film. The requirement of an adhesive film may render it difficult, however, to scale the method up to mass production. Another mechanical method of graphene production is disclosed in the patent application EP 2 275 385 A1, where graphene is exfoliated from graphite particles by means of grinding.

Other methods for separating the sheets that make up graphite involve chemical exfoliation by means of the oxidation of graphite yielding graphite oxide as an intermediate product. As compared to graphite, graphite oxide can more easily be exfoliated into single sheets or stacks of only a few sheets, which material is referred to as "graphene oxide". Graphene oxide can subsequently be reduced, removing the oxygen again. In the following, the material resulting from the reduction of graphene oxide is termed "reduced graphene oxide".

Methods for oxidising graphite are known in the art. The synthesis of graphite oxide was first published by Brodie in 1859 (see B.C. Brodie, "On the Atomic Weight of Graphite", Philosophical Transactions of the Royal Society of London 1859,149, page 249). Graphite was mixed with potassium chlorate and fuming nitric acid to yield graphite oxide.

W.S. Hummers in the patent US 2 798 878 A discloses a process for the production of graphitic oxide from graphite using an oxidising liquid comprising sulphuric acid, anhydrous nitrate and anhydrous permanganate. The reaction temperature according to said document is between 25°C and 45°C, preferably about 35°C, but transient temperatures as high as 70°C are said to do no harm. Carbon to oxygen-ratios down to between 2.05 and 1 are achievable when using this process. The structure of graphite oxide depends on the exact preparation method and is known to be heterogeneous, consisting of many single layers of graphene oxide. While no exact chemical formula can be given, it is generally believed that the most important functional groups are epoxy and hydroxyl moieties bound above and below individual carbon planes and carboxylic acids at the edges of individual graphene oxide sheets. Moreover, water molecules are bound between the graphene oxide sheets in graphite oxide. The sheet distance in graphite oxide is typically around 0.71 nm, well above the 0.34 nm sheet distance in graphite.

For the exfoliation of graphite oxide to graphene oxide, it is oftentimes exploited that the sheet distance in graphene oxide increases with increasing PH (see for example G. Ruess, "Über das Graphitoxyhydroxyd (Graphitoxyd)", Monatshefte für Chemie 1947, 76, page 381). Moreover, it is known that the exfoliation process to graphene oxide can be furthered by means of sonication,

While graphene oxide is not conductive, a conductive material can be obtained if oxygen groups are removed by thermal decomposition or chemical reduction in order to restore the sp² hybridization of at least part of the carbon atoms. For example, Y. Zhou et al. in "Hydrothermal Dehydration for the 'Green' Reduction of Exfoliated Graphene Oxide to Graphene and Demonstration of Tunable Optical Limiting Properties", Chem. Mater. 2009, 21, page 2950, disclose a hydrothermal method of reducing graphene oxide in water. In H. Boehm et al., "Dünnste Kohlenstoff-Folien", Zeitschrift fur Naturforschung 1962, 17b, page 150, hydrazine or hydrazine hydrate is used to reduce graphene oxide. Other known methods employ ascorbic acid, sodium boron hydride, hydrogen sulphide or tin chloride. P. Cui et al. in "One-pot reduction of graphene oxide at subzero temperatures", Chem. Commun. 2011, 47, page 12370, disclose a method in which hydriodic acid in combination with trifluoroacetic acid is employed to reduce graphene oxide at subzero temperatures.

M. Hirata et al. in "Thin-film particles of graphite oxide 1: High-yield synthesis and flexibility of the particles", Carbon 2004, 42, page 2929, describe the oxidation of graphite by the modification of Hummers' method, in which a very long oxidation period was combined with a high purity purification process. The oxidation steps involved allowing a mixture comprising graphite and KMnO₄ to stand for five days at about 20 °C.

A. Dimiev et al. in "Pristine Graphite Oxide", J. Am. Chem. Soc. 2012, 134, pages 2815 to 2822 disclose a method of purifying graphite oxide produced by known methods. They call the purified product "pristine graphite oxide" (pGO). The authors find that their pGO contains a significant amount of vacancy defects. Graphite oxide is synthesized from graphite by oxidation with concentrated sulfuric acid and subsequently quenched and washed by nonaqueous organic solvents and the resulting product is compared to graphite oxide quenched and washed with water. The graphite oxide obtained by quenching and washing with nonaqueous solvents is referred to as pristine graphite oxide. Exposure to water turns the light-colored pristine graphite oxide into dark-colored conventional graphite oxide.

An experimental investigation into the structure of graphene oxide has been published by Z. Xu et al. in "Electrical Conductivity, Chemistry, and Bonding Alternations under Graphene Oxide to Graphene Transition As Revealed by In Situ TEM", ACS Nano 2011, Vol. 5, pages 4401 - 4405. A suspended graphene oxide device is fabricated and investigated using transmission electron microscope (TEM) scanning tunneling microscope (STM) setup and a detailed study of step-by-step reduction of an individual graphene oxide sheet under current flow and Joule heating in tandem with conductivity measurements, atomic structure imaging, chemical composition and bonding alternations tracing is performed. The graphene oxide under investigation was prepared by a modified Hummers method.

It can be a disadvantage of reduced graphene oxide obtained by the methods discussed above that its properties, such as for example electrical conductivity, do not match that of graphene obtained by other methods. Without prejudice, the present inventors attribute this i.a. to two kinds of defects in the individual sheets of reduced graphene oxide: Carbon atoms removed from the two-dimensional hexagonal carbon lattice during reduction as they form CO and CO₂; and oxygen atoms incorporated into the lattice, where they can form stable ether groups.

### Problem underlying the invention

Accordingly, it is an objective of the present invention to provide an improved graphite oxide, in particular as regards its suitability as a precursor for the manufacture of graphene.

### Solution according to the invention

In order to solve the above problem, the invention teaches a pristine graphite oxide as defined in claim 1. The pristine graphite oxide is defined in that by exfoliating a single layer or a stack of less than 10 layers from the pristine graphite oxide, pristine graphene oxide can be obtained. This is i.a. based on the inventors' finding that producing graphite oxide as described herein yields a new quality of graphite oxide, which is particularly well suited as a precursor for the manufacture of graphene.

The terms "graphene" and "graphene oxide" in the present context encompass both single- and multi-layer graphene and graphene oxide, respectively. Single-layer graphene consists of a single graphene sheet, i.e. a single hexagonal lattice of sp²-hybridized carbon atoms, while multi-layer graphene comprises more than one but less than 10 graphene sheets stacked on top of each other. The same definition *mutatis mutandis* applies to single- and multi-layer graphene oxide.

Graphene, just like graphene oxide, graphite and graphite oxide can contain defects. As used here, the term "defects" in graphene, graphene oxide, graphite and graphite oxide refers to non-carbon substituents or gaps in their carbon lattice(s). Such defects can affect important properties of the material such as electrical and thermal conductivity and mechanical stability. Raman spectroscopy provides a good indication of the defect density in graphene. In the present context, in order to be termed "graphene" a material's defect density as inferred by Raman spectroscopy must be below a certain threshold. Materials with higher defect densities do not constitute graphene as defined herein, but may be referred to as "reduced graphene oxide", if they are obtained by reduction of graphene oxide.

The "defect density threshold" relevant for the above definition of graphene is provided by the ratio of the 2D and G peaks in the material's Raman spectrum and by means of the width of the 2D peak. If the 2D peak is higher than or equal to the G peak, and moreover the full width of the 2D peak at half maximum (FWHM) is less than 38 cm⁻¹, preferably less than 35 cm⁻¹, more preferably less than 32 cm⁻¹, most preferably less than 30 cm⁻¹, the material is termed graphene and the spectrum is a graphene Raman spectrum. In a graphene Raman spectrum, it is particularly preferable for the FWHM of the 2D peak to be less than 32 cm⁻¹ when graphene is fixed on a SiO₂ substrate and an excitation laser frequency of 532 nm is used.

In the present context, "pristine graphene oxide" refers to a graphene oxide that after reduction using the standard reduction protocol mentioned below yields graphene according to the above definition. That is, the material yielded has a graphene Raman spectrum. According to the standard reduction protocol, graphene oxide is reduced by a 1/1 mixture of hydriodic acid 57 % and trifluoroacetic acid. For this, graphene oxide is placed on a substrate (Si/SiO₂) and exposed to the vapour of the reduction mixture in a chamber for 5 minutes at room temperature and for another 10 minutes at 80 °C.

Pristine graphene oxide as defined here comprises at least 10⁶ carbon atoms.

The invention provides a new precursor for the production of graphene. In particular, the invention can help to reduce the manufacturing costs of graphene. Finally, by making the production of graphene accessible via a chemical route, the invention permits the large scale production of graphene.

### Preferred embodiments of the invention

Preferred features of the invention which may be applied alone or in combination are discussed below. Pristine graphite oxide can be produced by a method wherein graphite is oxidised by reaction with an oxidising agent. The term "oxidation" of graphite, graphene or carbon as used herein refers to a reaction in which carbon atoms form chemical bonds with oxygen atoms. Conversely, "reduction" refers to a reaction in which oxygen atoms are released from chemical bonds with carbon atoms.

A preferred oxidising agent is permanganate (e.g., KMnO₄) and/or chlorate (e.g., NaClO₃). Permanganate may be preferable over chlorate as the former can help to avoid undesired explosions. The use of chlorate may result in a cleaner reaction product with less contaminating side products. The oxidising agent can also be a mixture of two or more oxidising agents. At the end of the oxidation reaction and if permanganate was used as an oxidising agent, H₂O₂ can be added to the reaction mixture to solubilise manganese salts bound to the graphite oxide. In this way, the purification of the reaction products can be simplified.

The inventors have found out that "pristine graphene oxide" as specified above can be obtained by said oxidation of graphite, followed by a work-up. At first, graphite needs to be at least partly oxidised, so the resultant graphite oxide can be worked up in a subsequent step. The work-up comprises the addition of water and/or a diluted acid solvent, for example diluted sulphuric acid. The work-up may or may not comprise additional steps, such as sonication, centrifugation and resuspension in the original or a different solvent.

The pristine graphene oxide preferably comprises at least 10⁷, more preferably at least 10⁸, more preferably at least 10⁹, more preferably at least 10¹⁰ and most preferably at least 10¹² carbon atoms. The upper limit for the number of carbon atoms in pristine graphene oxide is preferably limited by the flake size of the graphite used. Moreover, pristine graphene oxide has an oxygen to carbon ratio of at least 1 in 20, preferably at least 1 in 10 and most preferably at least 1 in 5. The pristine graphene oxide as described herein can be reduced to graphene with advantageous properties, for example excellent electrical, heat conductive and mechanical properties.

Additionally, the inventors have found that graphene can be produced if all by-products produced throughout the oxidation and/or work-up contain less than 1 atom of carbon per 100 atoms of carbon contained in the graphite. Commonly, the by-products of the oxidation and work-up of graphite are made up almost entirely of carbon dioxide. However, by-products as described herein are also carbon monoxide, oxalic acid and carbonic acid. By-products can be formed as intermediates or as final by-products in the oxidation and/or work-up of graphite. In either case, the by-products in their entirety contain less than 1 atom of carbon per 100 atoms of carbon contained in the graphite. The inventors have found that by avoiding the production of by-products during oxidation and/or work-up, a graphite oxide or graphene oxide can be obtained, which lends itself to the manufacture of graphene or graphene-like materials with improved properties, some of them similar or identical to those observed in graphene produced by other methods. In particular, reduced graphene oxide with fewer defects and even graphene itself can be manufactured. Again without prejudice, the inventors attribute this to a particularly low defect density in the graphite oxide or graphene oxide as compared to the defect density present in graphite oxide or graphene oxide manufactured by conventional methods. Without intending to limit themselves to a particular explanation, they consider it plausible that the production of by-products can lead to the formation of defects in graphite oxide and graphene oxide, which may entail defects in the reduced graphene oxide obtained from such precursor material.

Preferably, all by-products produced throughout the oxidation and/or work-up contain less than 1 atom per 1000 atoms and most preferably less than 1 atom per 10 000 atoms of carbon contained in the graphite. The carbon dioxide and/or carbon monoxide produced during the entire oxidation and/or work-up contains preferably less than 1 atom of carbon per 100 atoms, more preferably less than 1 atom per 1000 atoms and most preferably less than 1 atom per 10 000 atoms of carbon contained in the graphite. By reducing the production of by-products, graphite oxide or graphene oxide is obtainable that can yield reduced graphene oxide, preferably graphene, with fewer defects.

Preferably, the oxidation and/or work-up is allowed to proceed for at least 5 hours, more preferably at least 10 hours, most preferably at least 20 hours. By allowing for a longer reaction time, a lower reaction temperature can be chosen and thus, according to the inventors' observations, fewer undesirable defects are introduced in the resultant graphite oxide. The inventors have observed that in this way, it is possible to obtain pristine graphite oxide. It is preferred that a low temperature is kept for at least 90%, more preferably at least 95%, most preferably at least 99% of the first 3 hours, preferably the first 5 hours, most preferably the first 10 hours after the initiation of the oxidation reaction and/or work-up. A low temperature is preferably a temperature between -10 and 20 °C, more preferably between -5 and 15 °C, most preferably within 0 and 10 °C. Preferably more than half, more preferably more than 90%, more preferably more than 95%, more preferably more than 99% of the carbon atoms which are oxidised in the graphite during the oxidation step and subsequent work-up are oxidised at the low temperature. Thereby, the introduction of defects into the resultant graphene oxide can be avoided.

Preferably, the oxidation of graphite is carried out in the presence of at least one acid solvent. The preferred acid solvent is sulphuric acid. The oxidation of graphite can be performed using fuming nitric acid. For safety reasons, however, it is preferable to carry out the oxidation of graphite in the presence of nitrate, particularly by adding NaNO₃, instead.

The graphite can, for example, be oxidised using the process described in the patent document US 2 798 878, which, as far as it refers to the oxidation process, is incorporated herein by reference, with the fundamental difference that the temperature of the oxidation and/or subsequent work-up is kept within -10 and 20 °C, preferably between -5 and 15 °C, most preferably within 0 and 10 °C, and/or the carbon content of by-products produced throughout the oxidation is below 1 atom per 100 atoms of carbon contained in the graphite or below one of the preferred limits recited above. The lower reaction temperature and the reduction in by-products can lead to fewer defects in the graphite oxide.

After graphite has been oxidised at least to some extent, the work-up can be performed. The work-up preferably includes the addition of water, either by itself or contained in a diluted acid solvent. By adding water, the acid solvent, in which the graphene oxide is dispersed, is diluted. A more dilute acid solvent can be less hazardous and thus, further processing of the graphene oxide is simplified. By adding diluted acid rather than pure water, it is achievable that less solvation energy is released as heat. By avoiding the production of heat, graphene oxide with a lower defect density can be obtained. The production of excessive heat can be prevented by very slow addition of the water or diluted acid. The slow addition can be performed dropwise, which allows for an easy visual control of the speed at which the addition is performed. Preferably, the speed of addition is dependent on the temperature of the reaction mixture. Also preferably, the addition is performed by a pump controlled by a thermostat, which reads the temperature of the reaction mixture. In this way, a low temperature can be sustained. The addition can also be performed continuously using a pump, which allows for a high degree of automation. When pure water is added instead of diluted acid, the dilution of the acid solvent can be performed by adding less liquid, yielding a higher graphene oxide concentration. Preferably, diluted acid is added at first, followed by addition of water. Preferably, the acid solvent is sulphuric acid and during work-up, diluted, preferably 10% sulphuric acid is added until the sulphuric acid concentration of the reaction mixture is approximately 50%, thereafter, purified water is added. In this way, the production of excessive heat is avoided while a high concentration of graphene oxide is maintained. Furthermore, the water or diluted acid added is preferably cooled prior to the addition, thus minimising the production of heat.

After the oxidation and/or work-up has taken place, graphene oxide can be produced by at least one of the methods including: sonication, centrifugation and addition of water, an acid or a base. By oxidising graphite to graphite oxide, the layer spacing can increase, at least partly due to water molecules intercalating between the graphite oxide layers. In addition to water, further intercalating agents may be used to increase layer spacing and thereby increase graphite oxide yield. It is frequently observed that some graphene oxide is released from the graphite oxide spontaneously during or after oxidation, the amount of graphene oxide released depending on the reaction conditions. Yet, in order to obtain better graphite oxide yields, the pH of the reaction mixture can be changed, preferably increased, exploiting the fact that an increase in pH can result in a further increase in layer spacing. Alternatively or in addition, sonication can help to exfoliate graphene oxide from the graphite oxide. Likewise, centrifugation and resuspension in the original or another solvent, preferably with a higher pH than the reaction mixture, can help to purify and/or to increase the yield of graphene oxide. Preferably, centrifugation and resuspension is repeated until the desired purity has been achieved. Instead of or in addition to centrifugation, it is also possible to separate the reaction products by sedimentation, which can prove a very cheap and reliable method. Purification of the reaction products can also be carried out by osmosis in order to remove dissolved salts, which can be a simple, standardised process. Alternatively, the graphite oxide and graphene oxide may be utilised in their unpurified state.

The graphene oxide can be reduced to graphene using a reducing agent. After the graphene oxide has been exfoliated from the graphite oxide, the graphene oxide can be reduced to reduced graphene oxide, preferably graphene. Preferred reducing agents include hydriodic acid, hydrazine, hydrazine hydrate, ascorbic acid, trifluoroacetic acid, sodium boron hydride, hydrogen sulphide, methanol and/or tin chloride. Especially preferred is the use of trifluoroacetic acid in combination with hydriodic acid, which makes it possible to carry out the reduction at sub-zero temperatures. Alternatively, the graphene oxide can be reduced in water by a hydrothermal method.

Once a dispersion of graphene oxide or graphene has been obtained, it can be diluted using organic solvents such as alcohol, preferably methanol due to its excellent solvent properties. Subsequently, such a dispersion can be used to make Langmuir-Blodgett films according to well-known procedures. Thin films of graphene and graphene oxide can be obtained by well-known film forming procedures, particularly drop-casting or spin-coating. Such thin films can offer desirable and novel features, especially relating to tensile strength, electrical and thermal conductivity.

The methods described herein can be performed in a small-scale experimental setup or in a larger scale industrial plant. The setup depends in large parts on the desired scale of production of graphite oxide, graphene oxide and graphene. Preferably, the setup or plant comprises a reaction vessel, which can be supplied with the reagents necessary to carry out said methods. The volume of the reaction vessel is not constrained in principle and can range for example from 0.5 ml to 50 I, preferably from 100 ml to 2 l. Preferably, the reaction vessel encompasses a means to agitate the reaction mixture. In order ensure homogenous concentration of reagents throughout the reaction mixture, rapid agitation is desirable. Furthermore, when reagents are added that can lead to the release of thermal energy, it is desirable to achieve a quick dispersal so as to avoid the production of local hot zones, in which reaction products can degrade. Moreover, when heat is released during the reaction, fast agitation of the reaction mixture may facilitate the conduction of heat out of the reaction vessel and into an adjacent cooling bath. Rapid agitation can be accomplished by using a stirrer that rotates inside the reaction mixture. Such a stirrer can, for example, be made up of a stirrer motor, which is connected to a stirrer shaft that carries at its end a stirrer paddle, which is at least partly submerged in the reaction mixture. Any addition of reagents is preferably performed in such a way that the reagents are poured slowly on top of the moving stirrer paddle or stirrer shaft so as to guarantee a quick dispersal of the reagents. The use of such stirrer carries the advantage that the reaction vessel can be made of a range of materials including glass, non-corrosive plastic or metal, including ferromagnetic substances. Additionally, such a stirrer can be scaled up to provide agitation in large reaction vessels.

Alternatively, agitation may be performed by using a magnetic stirrer bar placed in the reaction mixture. The reaction vessel can then be easily removed without having to detach a stirring device from it. Moreover, a stirrer often necessitates a seal at the point where it enters the reaction vessel, which can be a source of contamination. In contrast, when using a magnetic stirrer bar, no such seal is needed. Alternatively, the reaction vessel itself is moved, for example by rotation or another periodic movement that ensures the rotation of the reaction mixture. By thus avoiding the use of a stirring device that is in direct contact with the reaction mixture, the risk of contamination is minimised.

### Brief description of the drawings

The invention is illustrated in greater detail with the aid of graphs and a schematic drawing.
- Fig. 1: shows a Raman spectrum of graphene oxide obtained according to the prior art and reduced graphene oxide obtained according to the prior art;
- Fig. 2a: shows a thermogravimetric analysis of graphene oxide prepared according to the prior art;
- Fig. 2b: shows a thermogravimetric analysis of graphene oxide as described herein;
- Fig. 3a: shows a FTIR spectrum of graphene oxide prepared according to the prior art;
- Fig. 3b: shows a FTIR spectrum of graphene oxide as described herein;
- Fig. 4: shows a Raman spectrum of graphene oxide as described herein;
- Fig. 5a: shows a Raman spectrum of graphene obtained from graphene oxide as described herein in a first experiment;
- Fig. 5b: shows a Raman spectrum of graphene obtained from graphene oxide as described herein in a second experiment, which is independent of the first experiment; and
- Fig. 6: shows the experimental setup for the production of graphene oxide as described herein.

### Detailed description of the embodiments of the invention

### General methods

Natural flake graphite grade SC-20O was obtained from Kropfmuehl AG, Germany. High quality graphite grade 3061 was obtained from Asbury Carbon. Potassium permanganate, sodium nitrate, sulphuric acid were obtained from Sigma-Aldrich. Thermogravimetric analysis (TGA) and mass spectrometry (MS) was performed on a Netzsch STA 409 CD instrument equipped with a Skimmer QMS 422 mass spectrometer (using electron ionisation, EI) with the following programmed time dependent temperature profile: RT-800 °C (TGA-MS) with 10 K/min gradient, and cooling to RT. For analysis, the initial sample weights were about 6 to 7 mg. The entire analysis was accomplished under inert gas atmosphere with a He gas flow of 80 ml/min. A tensor Fourier transform infrared spectrometer (Bruker) equipped with ZnSe was used for the measurements of graphene oxide films. Freeze-drying was accomplished on an ALPHA 1-4 LDplus (Martin Christ). Samples were centrifuged on a Sigma 4K15 centrifuge. The samples we prepared by dropping a diluted dispersion of graphene oxide on Si/SiO₂ wafers. Raman spectroscopic studies were done on a LabRAM Aramis confocal Raman spectrometer (Horiba) equipped with a microscope and an automated XYZ table, at a laser excitation frequency of 532 nm if not mentioned otherwise. Elemental analysis was performed by combustion and gas chromatographic analysis with an EA 1110 CHNS analyser (CEInstruments).

### Production of graphene oxide according to the prior art

Graphene oxide was synthesised from natural flake graphite grade SC-20O according to Hummers, supra. Specifically, no pre-treatment of graphite was performed. 1 g graphite and 0.5 g sodium nitrate were dispersed in concentrated 24 ml sulphuric acid. The dispersion was cooled on ice to about 5 °C. After that, within a period of three hours, 3 g potassium permanganate was added in small portions and the dispersion was stirred for an additional three hours at a temperature between 20°C and 30°C. The reaction mixture was then poured onto 500 ml of ice and 10 ml of 3% hydrogen peroxide was added dropwise until gas evolution had completed. The graphite oxide obtained was purified by repeated centrifugation and dispersion in water until the pH of the supernatant was neutral. Finally, graphene oxide was yielded by mild sonication using a bath sonicator. The suspension was then centrifuged three times at 5000g to remove remaining graphite oxide. Elemental analysis showed the following fractions: C 43.22, H 2.27, N 0.0, S 6.15.

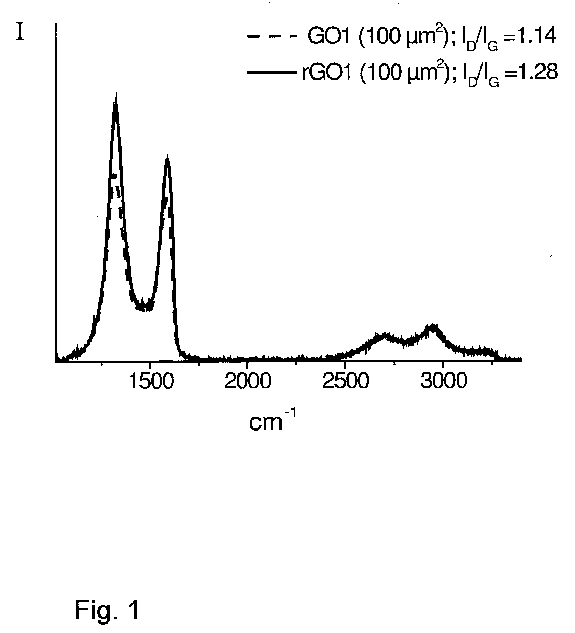

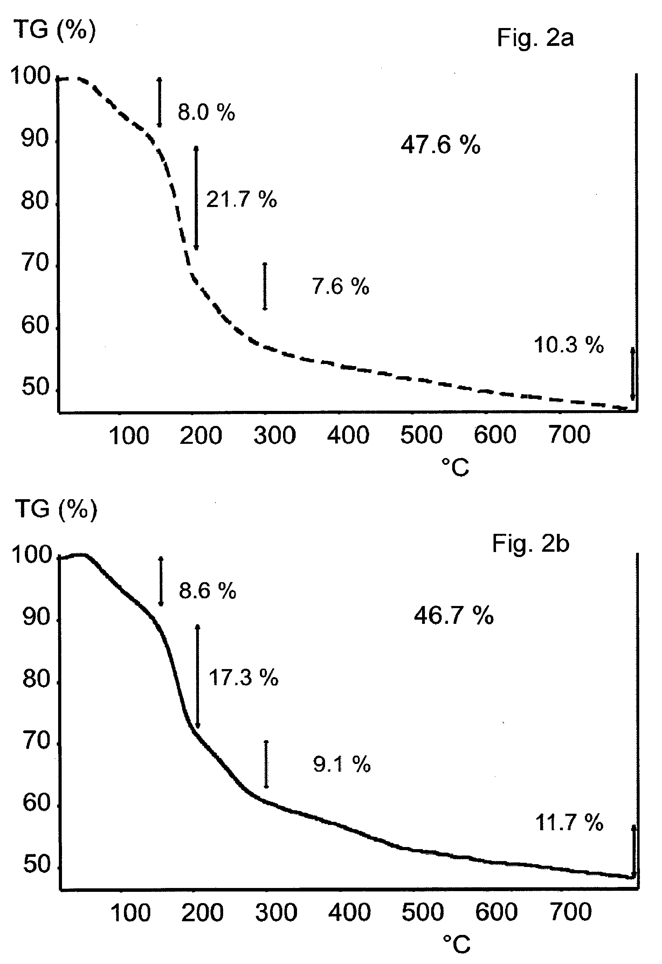

Figure 1 shows a Raman spectrum of graphene oxide prepared according to the prior art (dashed line, x-axis shows Raman shift in cm⁻¹, y-axis shows the signal intensity in arbitrary units). The peak on the far left is termed the D peak, the second peak from the left is described as the G peak. The intensity ratio of the D and G peak is 1.14. After reduction of the graphene oxide prepared according to the prior art, reduced graphene oxide is yielded, which shows the Raman spectrum displayed in figure 1 (solid line). The reduction of graphene oxide does not significantly change the Raman spectrum in figure 1. The intensity ratio of the D and G peak of the reduced graphene oxide in figure 1 is 1.28. Thermogravimetric analysis of graphene oxide prepared according to the prior art is shown in figure 2a, total weight loss was 47.6%.

### Production of graphene oxide

As in the prior art, the graphite was not pre-treated. 1 g high quality graphite grade 3061 and 0.5 g sodium nitrate were dispersed in 24 ml concentrated sulphuric acid. The dispersion was cooled to about 0 °C. After that, within a period of three hours, 3.0 g potassium permanganate was added. The temperature of the reaction mixture was kept below 10 °C while it was stirred for an additional 16 hours.

For the following work-up, while the reaction mixture was cooled persistently to below 10 °C for another two hours, 20 ml ice cold 10% sulphuric acid was added continuously to the reaction mixture. Subsequently, 60 ml water was added over six hours whilst the temperature of the reaction mixture was kept below 10 °C. Effectively, at least half the carbon atoms in the graphite were oxidised at a temperature below 10°C. The reaction mixture was then poured onto 500 ml ice and 20 ml 3% hydrogen peroxide was added dropwise until gas evolution was completed while the temperature was kept below 10 °C. The obtained graphite oxide was purified by repeated centrifugation at 5 °C and dispersion in cold water below 10 °C until the pH of the supernatant was neutral. Finally, graphene oxide was yielded by mild sonication using a bath sonicator, keeping the temperature below 10 °C. Even without sonication, graphite oxide exfoliated to graphene oxide to some extent. The suspension was finally centrifuged three times at 5000g to remove remaining graphite oxide.

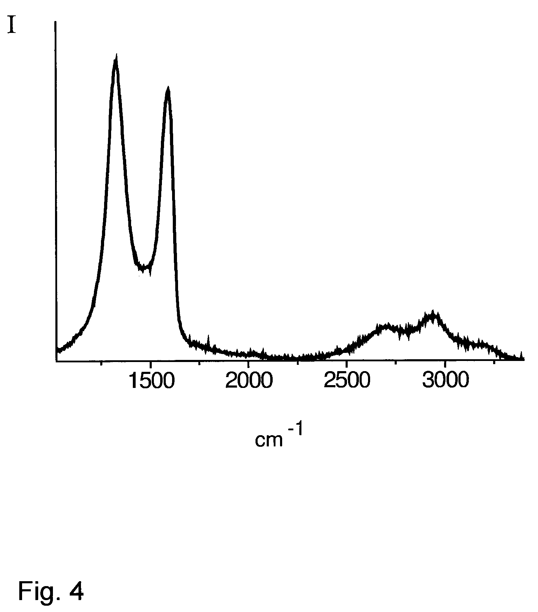

Total weight loss according to thermogravimetric analysis was 46.7%. Fig. 4 shows a Raman spectrum of graphene oxide prepared as described herein. Labelling of the axis is as in Fig. 1. There are no significant changes in the spectrum compared to the prior art. Fig. 2b shows thermogravimetric analysis of graphene oxide prepared as described herein. Similar to the prior art in Fig. 2a, weight loss up to 120°C is mainly due to adsorbed water, about 8 to 9%. Up to about 200 °C, the weight loss is 17.3% and 21.7% for the graphene oxide prepared as described herein and according to the prior art, respectively. Between 300 °C and 800 °C the graphene oxide as described herein shows 3% more weight loss compared to the graphene oxide prepared according to the prior art. The inventors conclude that there are functional groups present in the graphene oxide as described herein that are more stable than in the graphene oxide according to the prior art. Generally, there are only few differences in thermogravimetric analysis.

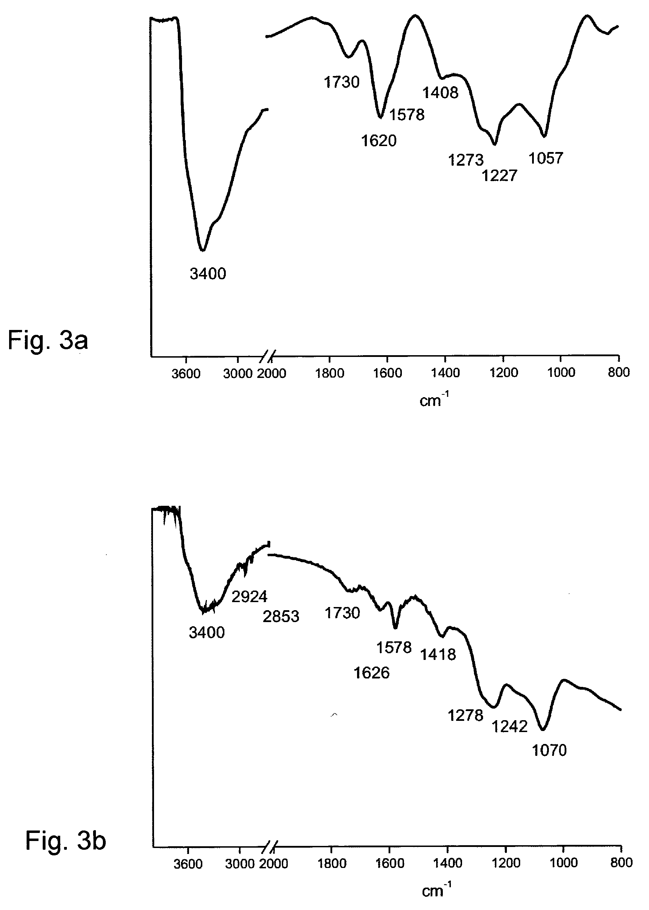

In order to obtain information about the nature of the functional groups, Fourier transform infrared spectroscopy (FTIR) was performed. The graphene oxide prepared according to the prior art shows a number of distinct signals in its FTIR spectrum as seen in Fig. 3a. The inventors assigned the signals between 3600 and 3200 cm⁻¹ to the O-H stretching vibration of free water, associated hydroxyl groups in graphene oxide and adsorbed water molecules. Further signals found are carbonyl signals at 1730 cm⁻¹ and signals that originate from adsorbed water at about 1625 cm⁻¹. The signals at about 1415 cm⁻¹ correspond to O-H deformation vibrations from carboxylic groups. A shoulder at 1580 cm⁻¹ can be assigned to double bonds. Vibrations of C-O-bonds of different species, mainly epoxy and hydroxyl groups, show signals in the range of 1300 and 800 cm⁻¹. In this range, distinct signals occur at about 1270, 1230, 1050 and 830 cm⁻¹. The signal at 1050 cm⁻¹ might also originate from skeletal C-C vibrational modes.

Fig. 3b shows the FTIR spectrum of graphene oxide prepared as described herein. In general, the same signals are found as in Fig. 3a. However, some prominent differences are noticeable. On the one hand, weak, but sharp signals occur at 2924 and 2853 cm⁻¹, which might be due to methyl groups. On the other hand and more strikingly, there is a clear difference of the signals between 1750 and 1500 cm⁻¹. The graphene oxide prepared according to the prior art shows signals at 1730 and 1620 cm⁻¹ with a shoulder at about 1580 cm⁻¹. In contrast, for the graphene oxide as described herein, three well-separated signals are found, which can be interpreted as an indication of the novel properties of graphene oxide as described herein.

### Reduction of graphene oxide

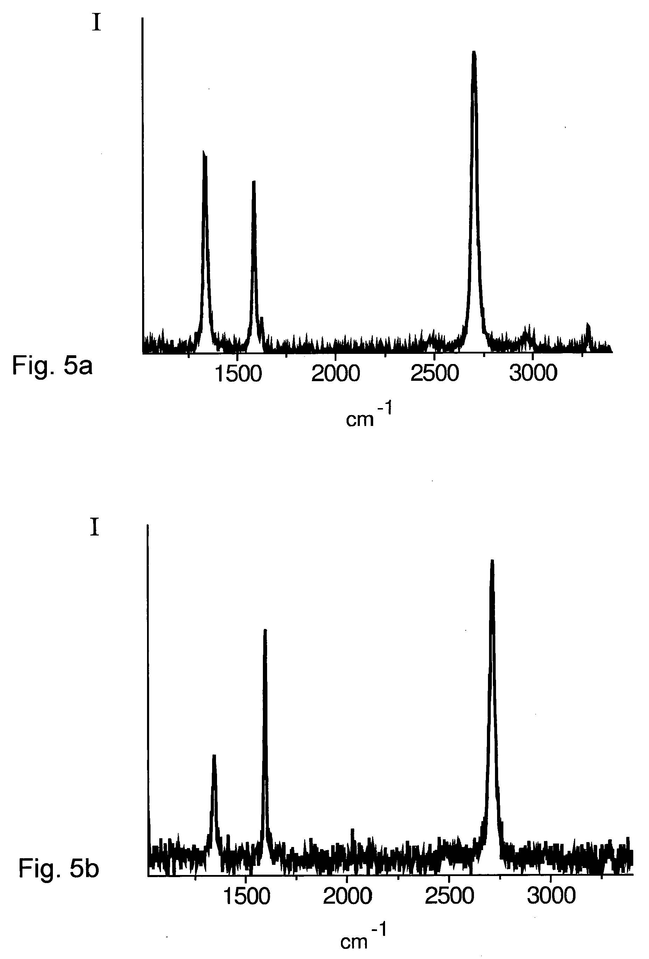

The reduction of graphene oxide was performed in hydriodic acid and trifluoroacetic acid. Depending on the temperature, the reduction can be completed within a time of several minutes. After reduction of the graphene oxide, Raman spectroscopy was performed. The results of two independent experiments are shown in Fig. 5a and 5b. In the experiment shown in Fig. 5a, the intensity ratio of the G and 2D peak is 0.58. This means that the 2D peak is higher than the G peak, which is typical for single layer graphene. The 2D peak in Fig. 5a and 5b is the peak on the right. Furthermore, the intensity ratio of the D and the G peak is 1.14 only, which corresponds to a distance of about 10 nm between two defects. This means that there is a mean graphene domain size of 10 by 10 nm². There are about 4500 carbon atoms present within 100 nm², which means that defects present in the graphene obtained as described herein as shown in Fig. 5a are below 3 in 10.000 carbon atoms.

In Fig. 5b, the intensity ratio of the D and G peak is 0.47 and the intensity ratio of the G and 2D peak is 0.77. This corresponds to a domain size of graphene of about 225 nm², which correlates to about 10.000 carbon atoms. The defect density of the experiment shown in Fig. 5b is thus below 1.3 atoms in 10.000 carbon atoms. The line widths of the peaks in Fig. 5a and Fig. 5b are described in full width at half maximum (FWHM). In Fig. 5a the G peak has a line width of 15 cm⁻¹ and the 2D peak has a line width of 30 cm⁻¹. In Fig. 5b the G peak has a line width of 11 cm⁻¹ and the 2D peak has a line width of 27 cm⁻¹. The line widths of Fig. 5a as well as Fig. 5b are fully in line with those found in graphene. Taken together, the results indicate that graphene has been produced by reduction of graphene oxide obtained as described herein. Therefore, the precursor graphene oxide was pristine graphene oxide.

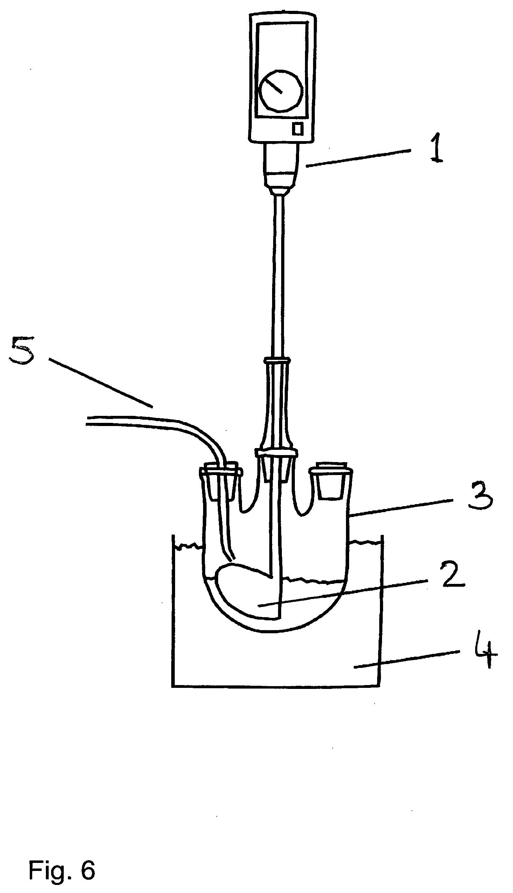

Fig. 6 shows a setup for the production of pristine graphite oxide, pristine graphene oxide and graphene . The setup comprises a motor 1 which drives a stirrer paddle 2, a reaction vessel 3 which is placed in a cooling bath 4 and which contains the reaction mixture. A tube 5 extends from the outside into the inside of the reaction vessel 3 and allows for liquids to be added to the reaction mixture by dropping them on top of the stirrer paddle 2. In order to produce graphene oxide as described herein, graphite, concentrated sulphuric acid and sodium-nitrite are placed in the reaction vessel 3. The reaction mixture is cooled using the cooling bath 4. Subsequently, potassium permanganate is added slowly, while keeping the temperature of the reaction mixture below 10° C. After that, the reaction products are worked up by adding ice cold 10% sulphuric acid through the tube 5, while the reaction mixture is still cooled to below 10° C. After that, the reaction mixture is poured from the reaction vessel 3 onto ice and hydrogen-peroxide is added dropwise until gas evolution is completed. The resultant graphite oxide can be purified by centrifugation and graphene oxide can be yielded by sonication while keeping the temperature below 10° C.

## Claims

1. Pristine graphite oxide, wherein pristine graphite oxide is defined in that if a single layer or a stack of less than 10 layers from the pristine graphite oxide is exfoliated, pristine graphene oxide is obtained,
pristine graphene oxide is defined in that it comprises at least 10⁶ carbon atoms and if it is reduced using a reduction protocol in which graphene oxide is reduced by a 1/1 mixture of hydriodic acid 57 % and trifluoroacetic acid by placing the graphene oxide on a Si/SiO₂ substrate and exposing it to the vapour of the reduction mixture in a chamber for 5 minutes at room temperature and for another 10 minutes at 80° C, pristine graphene oxide yields graphene, and
graphene is defined in that in the Raman spectrum of graphene the 2D peak is higher than or equal to the G peak, and moreover the full width of the 2D peak at half maximum (FWHM) is less than 38 cm⁻¹.

## Patentansprüche

1. Reines Graphitoxid, wobei reines Graphitoxid dadurch definiert ist, dass beim Ablösen einer einzelnen Lage oder eines Stapels von weniger als 10 Lagen von dem reinen Graphitoxid reines Graphenoxid erhalten wird,
reines Graphenoxid dadurch definiert ist, dass es mindestens 10⁶ Kohlenstoffatome umfasst und dass das reine Graphenoxid Graphen ergibt, wenn es unter Verwendung eines Reduktionsprotokolls reduziert wird, bei dem Graphenoxid durch eine 1/1 Mischung von Iodwasserstoffsäure 57% und Trifluoressigsäure reduziert wird, indem das Graphenoxid auf einem Si/SiO₂ Substrat platziert wird und dem Dampf der Reduktionsmischung in einer Kammer für 5 Minuten bei Zimmertemperatur und für weitere 10 Minuten bei 80 °C ausgesetzt wird, und
Graphen dadurch definiert ist, dass im Ramanspektrum von Graphen der 2D Peak höher oder gleich hoch ist wie der G Peak und außerdem die volle Breite des 2D Peaks bei halbem Maximum (FWHM) kleiner als 38 cm⁻¹ ist.

## Revendications

1. Oxyde de graphite vierge, dans lequel oxyde de graphite vierge est défini en ce que, si une seule couche ou un empilement de moins de 10 couches de l'oxyde de graphite vierge est exfolié(e), on obtient de l'oxyde de graphène vierge,
oxyde de graphène vierge est défini en ce qu'il comprend au moins 10⁶ atomes de carbone et s'il est réduit à l'aide d'un protocole de réduction dans lequel l'oxyde de graphène est réduit par un mélange 1/1 d'acide iodhydrique à 57 % et d'acide trifluoroacétique en plaçant l'oxyde de graphène sur un substrat de Si/SiO₂ et en l'exposant à la vapeur du mélange de réduction dans une chambre pendant 5 minutes, à la température ambiante, et encore pendant 10 minutes à 80 °C, l'oxyde de graphène vierge donne du graphène, et
graphène est défini en ce que, dans le spectre Raman du graphène, le pic 2D est plus élevé que, ou égal au pic G, et de plus la largeur totale du pic 2D à la moitié du maximum (FWHM) est inférieure à 38 cm⁻¹.
